(19) Europäisches Patentamt / European Patent Office / Office européen des brevets

(11) **EP 1 872 979 A2**

(12) **EUROPEAN PATENT APPLICATION**

(43) Date of publication:
**02.01.2008 Bulletin 2008/01**

(51) Int Cl.:
***B60C 23/04*** *(2006.01)*

(21) Application number: **07111061.3**

(22) Date of filing: **26.06.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU**<br><br>(30) Priority: **29.06.2006 JP 2006179709**<br><br>(71) Applicant: **FUJITSU LIMITED**<br>**Kawasaki-shi, Kanagawa 211-8588 (JP)**<br><br>(72) Inventors:<br>• **Aoki, Kouju**<br>**Kasugai-shi**<br>**Aichi 487-0013 (JP)** | • **Watai, Takahiro**<br>**KASUGAI-SHI**<br>**Aichi 487-0013 (JP)**<br>• **Sakima, Hiroyuki**<br>**KASUGAI-SHI**<br>**Aichi 487-0013 (JP)**<br>• **Mizutani, Masaya**<br>**KASUGAI-SHI**<br>**Aichi 487-0013 (JP)**<br>• **Okajima, Takuya**<br>**KASUGAI-SHI**<br>**Aichi 487-0013 (JP)**<br><br>(74) Representative: **Kreutzer, Ulrich et al**<br>**Cabinet Beau de Loménie**<br>**Bavariaring 26**<br>**80336 München (DE)** |

(54) **Amplifier and control method thereof**

(57)     An amplifier (1) is arranged to amplify a sense signal from a sensor with low current consumption while maintaining sufficient sensitivity. The amplifier (1) comprises a detection circuit (2) which detects a signal level of the sense signal and outputs an alarm signal when the sense signal is in a first signal level range, and a variable gain amplifier (3) which, based on a detection result of the detection circuit (2), stops an amplifying operation when the sense signal is in the first signal level range, performs the amplifying operation at a first gain when the sense signal is in a second signal level range, or performs the amplifying operation at a second gain larger than the first gain when the sense signal is in a third signal level range defined between the first and second signal level ranges.

FIG. 1

EP 1 872 979 A2

**Description**

BACKGROUND OF THE INVENTION

1. Field of the Invention

It is related to an amplifier and particularly to an amplifier which amplifies an output signal from a sensor.

2. Description of Related Art

Amplifiers which amplify a sense signal output from a sensor have been requested to reduce power consumption. In recent years, for example, equipment or devices which execute processing by amplifying a sense signal output from a sensor have been provided as a structure that operates on electricity supplied from a battery in various cases where: it is used for portable or mobile devices; it has to be placed independently and away from a power supply; and it cannot be equipped with a large-sized power supply because of a limited mounting space or weight. For those devices, it is particularly important to operate with low current consumption in order to ensure a sufficient available time up to replacement or recharge of the battery. The amplifier that amplifies the sense signal has also been requested to allow the low current consumption operation while keeping amplification characteristics.

A variable gain amplifier disclosed in Japanese unexamined patent publication No. 8(1996)-18348 comprises, as shown in Fig. 8, a plurality of fixed gain amplifiers 200, 240, and 280, which constitute a multistage amplifier, gain changeover switches 180, 220, and 260, and power switches 190, 230, and 270 connected to the fixed gain amplifiers 200, 240, and 280 respectively. An output changeover switch 300 is connected to the fixed gain amplifier 280 located in a last stage of the multistage amplifier. The gain changeover switches 180, 220, and 260 are connected to input sides of the fixed gain amplifiers 200, 240, and 280 respectively to switch between the input of a signal to a fixed gain amplifier in a subsequent stage and the input of a signal to the output changeover switch 300. The gain changeover switches 180, 220, and 260 and the power switches 190, 230, and 270 are controlled by control circuits 170, 210, and 250 respectively.

The control circuits are provided to control the power to the fixed gain amplifiers in synchronization with the gain changeover in the variable amplifier. This is to reduce power consumption of the entire variable gain amplifier in lowering a gain while ensuring rising characteristics of the fixed gain amplifiers at power-on.

Further, another related art is disclosed in Japanese unexamined patent publication No. 8(1996)-297062.

In the conventional variable gain amplifier mentioned above, the gain changeover switches 180, 220, and 260 and the power switches 190, 230, and 270 are controlled by the control circuits 170, 210, and 250, so that a gain to the sense signal and amounts of current to be consumed can be changed.

In the aforementioned related art, however, there is no disclosure or implication about a relationship between a signal level range of the sense signal output from the sensor and needed sensitivity thereto. Even though the conventional device comprises the control circuits 170, 210, and 250, it would be hard to choose optimum sensitivity to the sense signal and change the current consumption according to such desired sensitivity.

Consequently, the battery-operated device which amplifies a sense signal do not allow operation with low current consumption while ensuring sufficient sensitivity needed according to the sense signal to lengthen the available time of the device in operating on batteries.

Here, the sensor may include for example a pressure sensor for monitoring the air pressure in a tire. When the control is to be executed depending on the tire pressure, uniform signal intensity does not need throughout a range of air pressure. To be specific, the sensing sensitivity to the sense signal may be increased if the air pressure approaches an abnormal value, whereas it may be kept low if the air pressure is in a normal range. Further, even though it is necessary to inform of abnormal air pressure in case a value of the air pressure falls within a range representing abnormality, there is no longer significance of detecting such air pressure. As to the device which operates based on physical values detected by the sensor, there may be cases where the sense signal is not always required to be amplified uniformly throughout a range of the sense signal. In other words, such device is requested only to have appropriate sensitivity according to sense signal ranges. If the sense signal is in a signal range for which a high gain is not required, the device is desired to provide a lower gain, thereby saving current consumption.

BRIEF SUMMARY OF THE INVENTION

In view of the above circumstances, an object is to provide an amplifier which amplifies a sense signal output from a sensor to allow operations with low current consumption while ensuring sufficient sensitivity.

To achieve the purpose, there is provided an amplifier which amplifies an input signal, comprising: a detection circuit which detects a signal level of the input signal and outputs an alarm signal when the input signal is in a first signal level range; and a variable gain amplifier arranged to, based on a detection result of the detection circuit, stop an amplifying operation when the input signal is in the first signal level range, perform the amplifying operation at a first gain when the input signal is in a second signal level range, and perform the amplifying operation at a second gain larger than the first gain when the input signal is in a third signal level region defined between the first and second signal level ranges.

Further, according to another aspect, a control method of an amplifier which amplifies an input signal is provided, the method comprising the steps of: detecting a signal level of the input signal; outputting an alarm signal when the input signal is in a first signal level range; based on a detection result in the signal level detecting step, stopping an amplifying operation when the input signal is in a first signal level range, executing the amplifying operation at a first gain when the input signal is in a second signal level range, and executing the amplifying operation at a second gain larger than the first gain when the input signal is in a third signal level range defined between the first and second signal level ranges.

The amplifier is adapted to output the alarm signal and stop the amplifying operation when the input signal is in the first signal level range; to perform the amplifying operation at the first gain when the input signal is in the second signal level range; and to perform the amplifying operation at the second gain larger than the first gain when the input signal is in the third signal level range defined between the first and second signal level ranges.

With the above configuration, theamplifierwillamplify the signal at the second gain larger than the first gain if the signal is in the third signal level range continuous with the first signal level range resulting in stop of the amplifying operation. Thus, it is possible to detect with sufficient sensitivity whether or not the signal has reached the first signal level range. Further, the amplifying operation is stopped when the signal is in the first signal level range, so that current consumption may be reduced. The signal in the second signal level range is amplified at the first gain smaller than the second gain. If an amplifying manner that reduces bias current to lower a gain, for example, low current consumption can be attained.

The above and further objects and novel features of the invention will more fully appear from the following detailed description when the same is read in connection with the accompanying drawings. It is to be expressly understood, however, that the drawings are for the purpose of illustration only and are not intended as a definition of the limits of the invention.

BRIEF DESCRIPTION OF THE DRAWINGS

The accompanying drawings, which are incorporated in and constitute a part of this specification illustrate an embodiment of the invention and, together with the description, serve to explain the objects, advantages and principles of the invention.

In the drawings,

Fig. 1 is a block diagram showing a configuration of an amplifier of a first embodiment;
Fig. 2 is a circuit diagram showing a configuration of a variable gain amplifier;
Fig. 3 is a graph showing a gain to an input level of the amplifier of the first embodiment;
Fig. 4 is a block diagram showing a configuration of an amplifier of a second embodiment;
Fig. 5 is a circuit diagram showing a configuration of a first amplifier;
Fig. 6 is a circuit diagram showing a configuration of a second amplifier;
Fig. 7 is a graph showing input-output characteristics of the first and second amplifiers; and

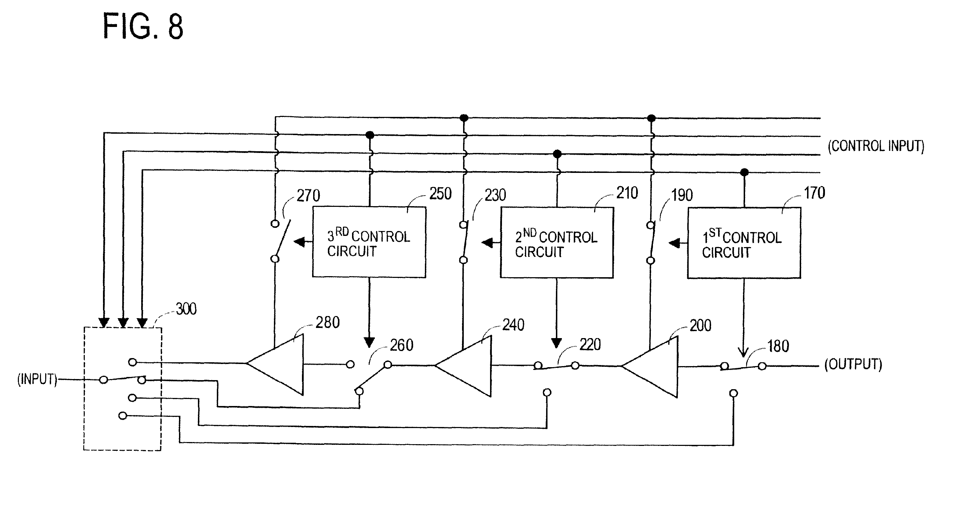

Fig. 8 is a block diagram showing a configuration of a variable gain amplifier in related art.

DETAILED DESCRIPTION OF THE PREFERRED EMBODIMENTS

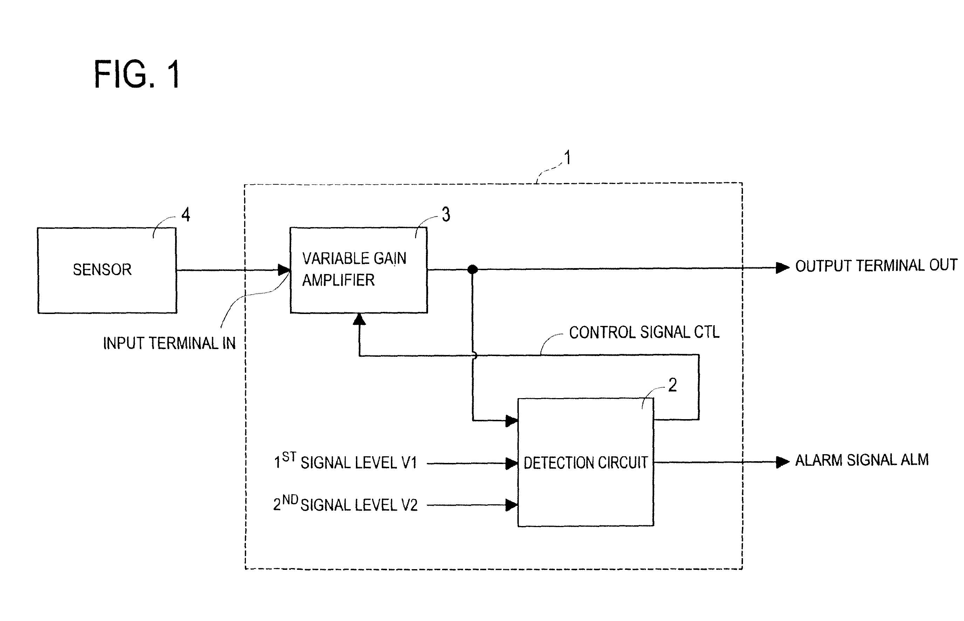

A detailed description of preferred embodiments of an amplifier of the present invention will now be given referring to accompanying Figs. 1 to 7.

[First Embodiment]

Fig. 1 is a block diagram of an amplifier 1 of a first embodiment. This amplifier 1 comprises a detection circuit 2 and a variable gain amplifier 3 and is arranged to receive a sense signal from a sensor 4 at an input terminal IN, amplify the sense signal, and then output the amplified signal from an output terminal OUT of the amplifier 3.

The detection circuit 2 receives the output signal from the output terminal OUT of the variable gain amplifier 3 and outputs an alarm signal ALM and a control signal CTL to the amplifier 3. The detection circuit 2 is provided with a first signal level V1 and a second signal level V2.

An output voltage level VOUT at the output terminal OUT is compared with the first signal level V1 and the second signal level V2. As a result of the comparison, when the output voltage level VOUT is lower than the first signal level V1, the detection circuit 2 outputs the alarm signal ALM and simultaneously the control signal CTL to command the variable gain amplifier 3 to stop the operation thereof.

When the output voltage level VOUT is higher than the second signal level V2, the detection circuit 2 outputs a control signal CTL to command the variable gain amplifier 3 to perform an amplifying operation at a first gain G1.

In the case where the output level VOUT is the first signal level V1 or higher and the second signal level V2 or lower, the detection circuit 2 outputs a control signal CTL to cause the variable gain amplifier 3 to perform the amplifying operation at a second gain G2 which is larger than the first gain G1.

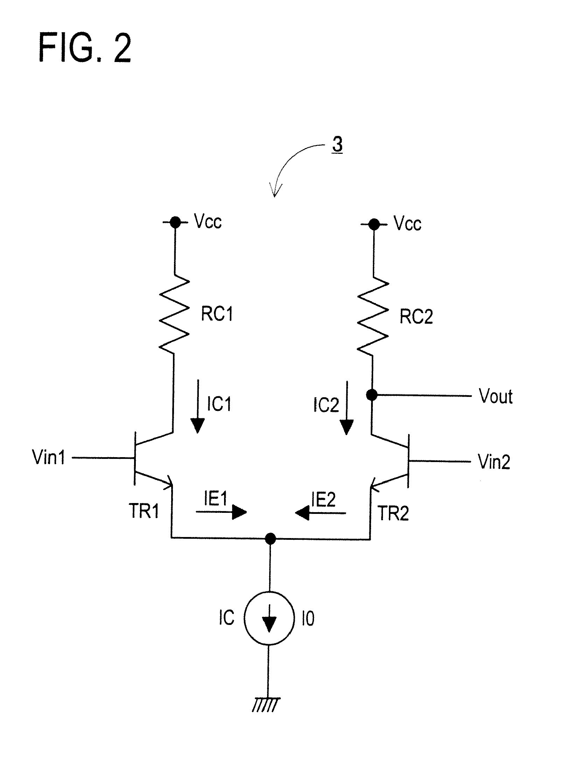

A bias current in the variable gain amplifier 3 is controlled in response to the control signal CTL, so that the variable gain amplifier 3 stops the amplifying operation or performs the amplifying operation at the first gain G1 or the second gain G2. Fig. 2 is a circuit diagram showing an example of a configuration of the variable gain amplifier 3. This amplifier 3 is a differential amplifier composed of a bipolar transistor, which includes resistors RC1 and RC2, transistors TR1 and TR2, and a current source IC. A set of the resistor RC1 and the transistor TR1 that are connected in series and another set of the resistor RC2 and the transistor TR2 that are connected in series are connected in parallel between respective power supply potentials VCC and one end of the current source IC. Further, the transistors TR1 and TR2 have base terminals in which input signals Vin1 and Vin2 are input respectively. The other end of the current source IC is connected to a ground potential.

In the variable gain amplifier 3, an output potential Vout is represented by the following expression:

$$Vout = VCC - (IC2 \times RC2)$$

where IC2 is represented by:

$$IC2 = Hfe \: / \: (1 + Hfe) \times I0 \: / \: (1 + exp \: (q/kT) \times (Vin1 - Vin2)).$$

Accordingly, reducing the bias current IO of the current source IC can lower a gain. In other words, in the variable gain amplifier 3, lowering gain makes it possible to reduce the bias current. When the variable gain amplifier 3 is operated at the gain G1 which is smaller than the second gain G2, it can be operated at a smaller bias current than it is operated at the gain G2. Power consumption thereof can therefore be restrained.

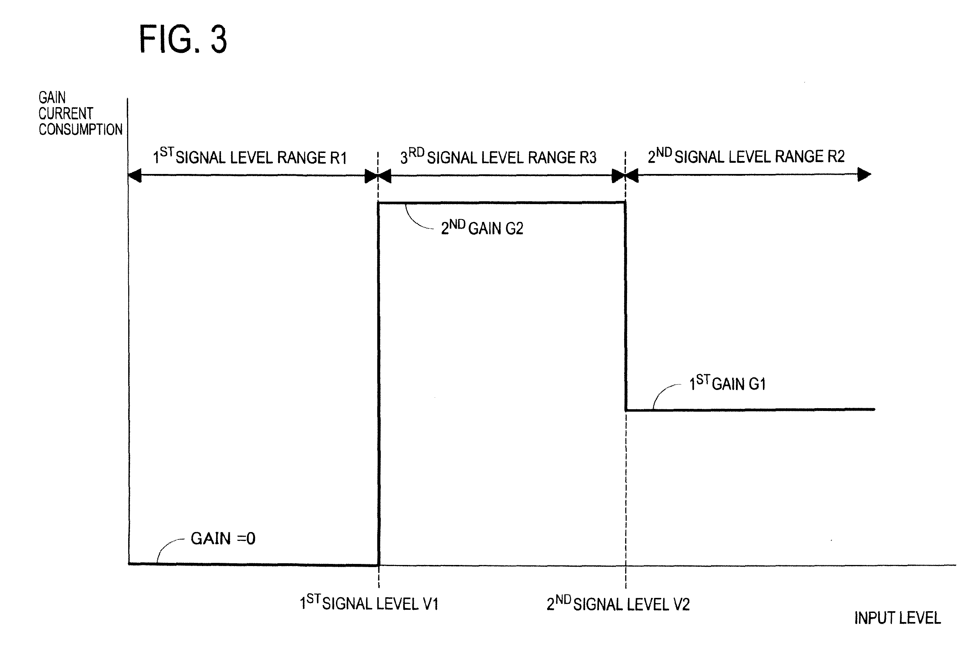

Fig. 3 is a graph showing a relationship among an input level (i.e. the output voltage level VOUT) to the detection circuit 2 and current consumption and a gain of the variable gain amplifier 3.

When the input level falls within a first signal level range R1 which is lower than the first signal level V1, the variable gain amplifier 3 is stopped, the gain becomes zero and current consumption decreases to almost zero. In this case, the detection circuit 2 outputs the alarm signal ALM.

When the input level falls within a second signal level range R2 which is higher than the second signal level V2, the variable gain amplifier 3 is caused to amplify the sense signal at the first gain G1.

When the input level falls within a third signal level range R3 defined between the first signal level V1 and the second signal level V2, the variable gain amplifier 3 is caused to amplify the sense signal at the second gain G2. Thus, it is possible to detect with sufficient sensitivity as to whether or not the input level reaches the first signal level V1 or the second signal level V2.

In the first signal level range R1 and the second signal level range R2, power consumption can be more restrained as compared in the third signal level range R3. The amplifier 1 in the present embodiment allows operations with low current consumption while ensuring sufficient sensitivity to the sense signal.

[Second Embodiment]

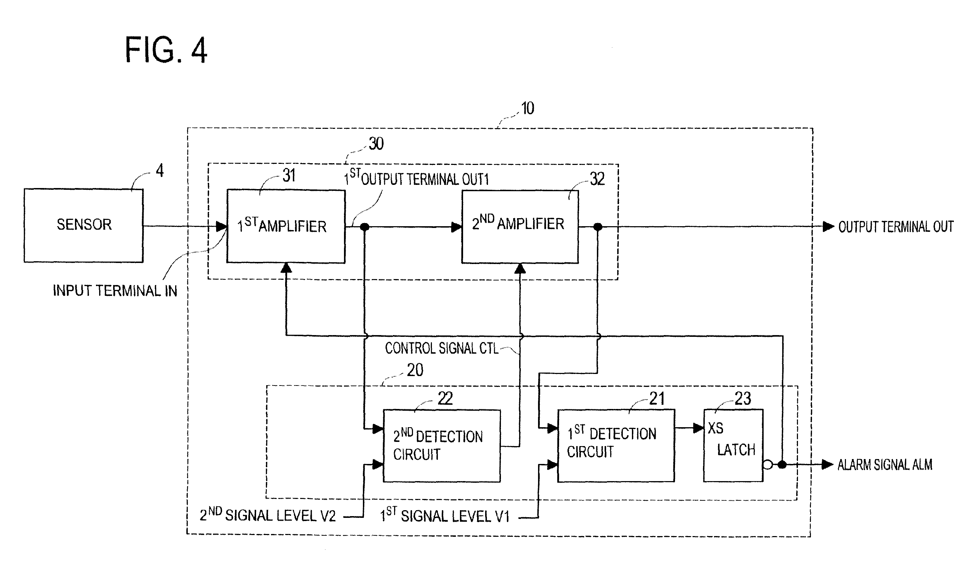

Fig. 4 is a block diagram showing a configuration of an amplifier 10 of a second embodiment. This amplifier 10 is arranged to receive a sense signal from a sensor 4 at an input terminal IN, amplify the sense signal, and then output the amplified signal from an output terminal OUT. The amplifier 10 is composed of a detection section 20 and an amplification section 30. The detection section 20 includes a first detection circuit 21, a second detection circuit 22, and a latch 23. The amplification section 30 includes a first amplifier 31 and a second amplifier 32.

The first detection circuit 21 receives an output signal from an output terminal OUT of the second amplifier 32 and is provided with a first signal level V1 and is connected to the latch 23 which outputs an alarm signal ALM. This alarm signal ALM is a negative logic signal which is active low. In the first detection circuit 21, an output voltage level VOUT at the output terminal OUT is compared with the first signal level V1. As a result of the comparison, when the output voltage level VOUT is lower than the first signal level V1, a signal of a low level is output. In the latch 23, its inverting set terminal XS is connected to an output terminal of the first detection circuit 21. Accordingly, once an output signal from the first detection circuit 21 changes to a low level, the alarm signal ALM is output at a low level and remains at that level. The alarm signal ALM therefore remains at the low level once it is output at the low level. Even if the output voltage level VOUT thereafter exceeds the first signal level V1, the alarm signal ALM will not change.

The second detection circuit 22 receives an output signal from a first output terminal OUT1 of the first amplifier 31 and is provided with a second signal level V2, and outputs a control signal CTL. In the second detection circuit 22, a first output voltage level VOUT1 at the first output terminal OUT1 is compared with the second signal level V2. If the first output voltage level VOUT1 exceeds the second signal level V2, the second detection circuit 22 outputs a control signal CTL of a low level to command the second amplifier 32 to stop its amplifying operation.

The first amplifier 31 is arranged to amplify a signal input at an input terminal IN connected to a sensor 4 or the like. The first amplifier 31 stops an amplifying operation in response to the alarm signal ALM of a low level and outputs a fixed-high-level signal.

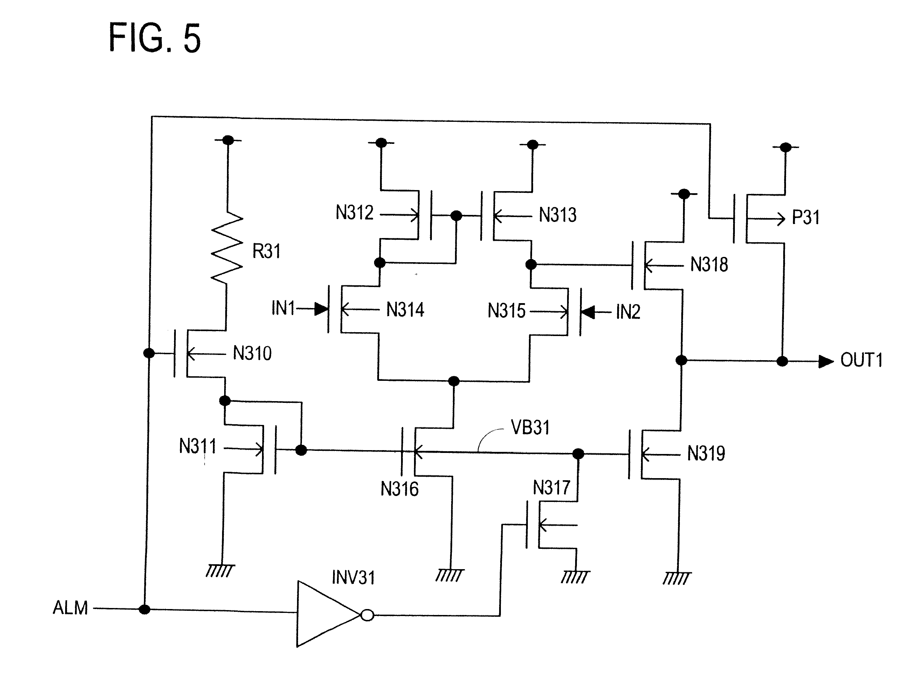

Fig. 5 is a circuit diagram showing a configuration of the first amplifier 31, which includes a PMOS transistor P31, NMOS transistors N310 to N319, a resistor R31, and an inverter INV31.

Of them, the NMOS transistors N312 to N316 constitute a current mirror type amplifier which receives a differential signal at input terminals IN1 and IN2. The resistor R31 and the NMOS transistor N311 generate bias voltage to the NMOS transistor N316 serving as a current source of the above current mirror type amplifier. Further, the NMOS transistors 318 and 319 constitute an output buffer.

In response to the alarm signal ALM, the NMOS transistors N310 and N317 and the inverter INV31 control interruption of the bias current in the current mirror type amplifier. If the alarm signal ALM is at a low level, for instance, a gate terminal of the NMOS transistor N317 is set to a high level through the inverter INV31, whereas a gate terminal of the NMOS transistor N310 is set to a low level. Accordingly, the NMOS transistor N310 is brought out of conduction, while the NMOS transistor N317 is brought into conduction. This causes a bias voltage VB31 to become a low level and interrupts the bias current to the NMOS transistor N316.

On the other hand, if the alarm signal ALM is at a high level, the gate terminal of the NMOS transistor N317 is set to a low level through the inverter INV31 and the gate terminal of the NMOS transistor N310 is set to a high level. Accordingly, the NMOS transistor N310 is brought into conduction, while the NMOS transistor N317 is brought out of conduction. Thus the bias voltage VB31 becomes a potential determined depending on the resistor R31 and the NMOS transistor N311, allowing an appropriate bias current to flow in the NMOS transistor N316, thereby activating the current mirror type amplifier.

The PMOS transistor P31 is a transistor for stabilizing the output signal from the first output terminal OUT1 at a high level in response to the alarm signal ALM. Specifically, if the alarm signal ALM is at a low level, making the PMOS transistor P31 conductive, a high-level signal will be output at the first output terminal OUT1. If the alarm signal ALM is at a high level, on the other hand, making the PMOS transistor P31 nonconductive, a signal will be output from the NMOS transistors N318 and N319.

With the above configuration, when the output voltage level VOUT is lower than the first signal level V1, the alarm signal ALM is output, causing the first amplifier 31 to stop its amplifying operation and simultaneously interrupting the bias current for activating the first amplifier 31, providing zero gain. Thus, power consumption is restrained.

The second amplifier 32 is arranged to amplify a signal of the first output voltage level VOUT1 output from the first amplifier 31. At an initial stage, the control signal CTL is at a low level, and accordingly, the second amplifier 32 is caused to stop an amplifying operation and output a fixed-high-level signal. Then, when the control signal CTL transfers to a high level, the second amplifier 32 is caused to start the amplifying operation.

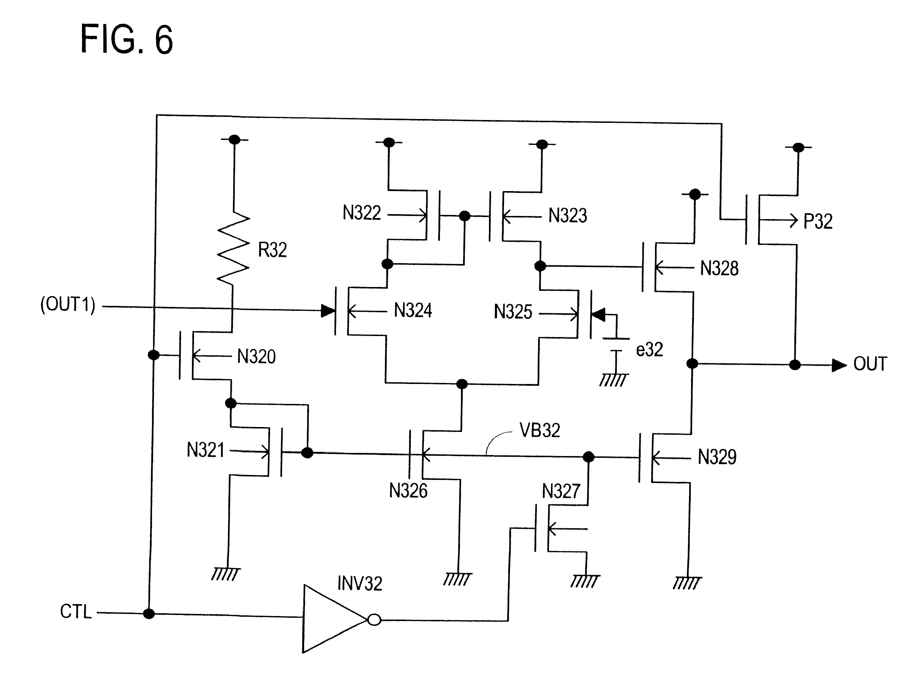

Fig. 6 is a circuit diagram showing a configuration of the second amplifier 32. This second amplifier 32 includes a PMOS transistor P32, NMOS transistors N320 to N329, a resistor R32, and an inverter INV32.

Of them, the NMOS transistors N322 to N326 constitute a current mirror type amplifier whose differential input having one end connected to a reference voltage e32 and the other end connected to the first output terminal OUT1 of the first amplifier 31. Further, the resistor R32 and the NMOS transistor N321 produce bias voltage to the NMOS transistor N326 serving as a current source of the above current mirror type amplifier. The NMOS transistors N328 and N329 constitute an output buffer.

The NMOS transistors N320 and N327 and the inverter INV32 correspond to a switching transistor which controls interruption of the bias current in the current mirror type amplifier in response to input of the control signal CTL. If the control signal CTL is at a low level, for instance, a gate terminal of the NMOS transistor N327 is set to a high level through the inverter INV32, whereas the gate terminal of the NMOS transistor N320 is set to a low level. Accordingly, the NMOS transistor N320 is brought out of conduction, while the NMOS transistor N327 is brought into conduction. This causes a bias voltage VB32 to become a low level and interrupts the bias current to the NMOS transistor N326, providing zero gain.

On the other hand, if the control signal CTL is at a high level, the gate terminal of the NMOS transistor N327 is set to a low level through the inverter INV32, whereas the gate terminal of the NMOS transistor N320 is set to a high level. Accordingly, the NMOS transistor N320 is brought into conduction, while the NMOS transistor N327 is brought out of conduction. Thus, the bias voltage VB32 becomes a potential determined depending on the resistor R32 and the NMOS transistor N321, allowing an appropriate bias current to flow in the NMOS transistor N326, thereby activating the current mirror type amplifier.

The PMOS transistor P32 is a transistor for stabilizing an output signal from the output terminal OUT at a high level in response to the control signal CTL. Specifically, if the control signal CTL is at a low level, making the PMOS transistor P32 conductive, the high-level signal will be output at the output terminal OUT. If the control signal CTL is at a high level, making the PMOS transistor P32 nonconductive, a signal will be output from the NMOS transistors N328 and N329.

In the second amplifier 32, the amplifying operation is enabled or stopped in response to the control signal CTL. In other words, when the first output voltage level VOUT1 is lower than the second signal level V2, the control signal CTL is output at a high level, causing the amplifying operation of the second amplifier 32 to start. When the first output voltage level VOUT1 is higher than the second signal level V2, on the other hand, the control signal CTL is output at a low level, causing the amplifying operation of the second amplifier 32 to stop. In this case, specif ically, the bias current flowing in the second amplifier 32 is interrupted, providing zero gain. Thus, power consumption is restrained.

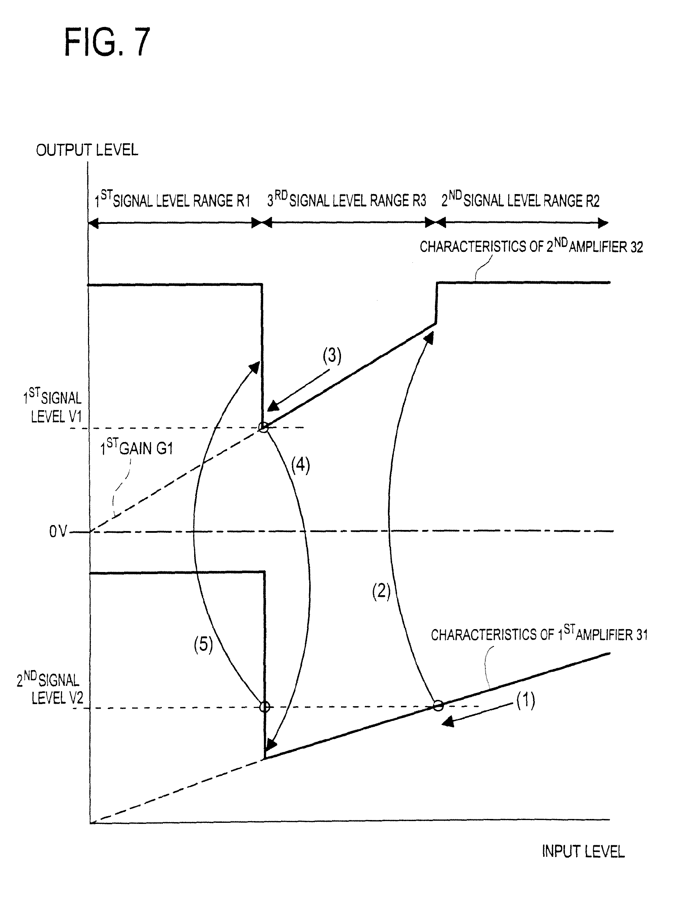

The following explanations will be made on operations of the amplifier 10, referring to Fig. 7. Fig. 7 is a graph showing input/output characteristics of the first amplifier 31 and the second amplifier 32. In this graph, the lateral axis indicates an input level of a signal from the sensor into each amplifier and the vertical axis indicates an output level of each amplifier. An upper part of the graph shows the input/output characteristics of the second amplifier 32, while a lower part of the same graph shows the input/output characteristics of the first amplifier 31. Further, it is assumed that the input level of the signal from the sensor is initially the maximum (the rightmost end in Fig. 7) and gradually decreases.

In the period (1), the first amplifier 31 operates so that its output level changes in a second signal-level range R2 in which the input level to the second detection circuit 22 is higher than the second signal level V2. This causes the second detection circuit 22 to output a low level signal, thus commanding the second amplifier 32 to stop its amplifying operation. Consequently, the second amplifier 32, in which the bias current is interrupted, providing zero gain, can operate with low current consumption than in the case where it performs the amplifying operation.

At the time (2), the output level of the first amplifier 31 falls below the second signal level V2. The second amplifier 32 will operate to output a signal of a level in a third signal-level range R3. The second detection circuit 22 is caused to output a high level signal, commanding the second amplifier 32 to start the amplifying operation. In the second amplifier 32, accordingly, changes in output to input, namely, sensitivity is increased to a sufficient degree for detection until the output voltage level VOUT of the second amplifier 32 becomes lower than the first signal level V1 in the period (3).

At the time (4), when the output level of the second amplifier 32 falls below the first signal level V1, a command to stop the amplifying operation is transmitted from the first detection circuit 21 to the first amplifier 31 via the latch 23. Thus, the amplifying operation of the first amplifier 31 is stopped and the output signal at the first output terminal OUT1 clips to a high level.

At the time (5), when the output signal at the first output terminal OUT1 of the first amplifier 31 exceeds the second signal level V2, the second detection circuit 22 transmits a command to the second amplifier 32 to perform the amplifying operation at the first gain G1 again. The second amplifier 32 will thus operate to output a signal of a level in a first signal-level range R1. Accordingly, the second amplifier 32, in which the bias current is interrupted again, will operate with low current consumption than in the case where it performs the amplifying operation. It is to be noted that the second amplifier 32 receives the output signal having clipped to a high level from the first output terminal OUT1, so that it outputs a high level signal at the output terminal OUT.

As explained above in detail, according to the amplifier 10 in the present embodiments, it is possible to achieve an amplifier which amplifies a sense signal from a sensor 4 with low electric power consumption while keeping sufficient sensitivity.

The present invention is not limited to the above embodiments and may be embodied in other specific forms without departing from the essential characteristics thereof.

In the above embodiment, for instance, the second amplifier 32 is stopped for the second signal level range R2 and the bias current thereto is interrupted. Alternatively, the present invention may also be applied to another embodiment in which the bias current in the second amplifier 32 is reduced for the second signal level range R2 to cause the second amplifier 32 to operate at a smaller gain.

Further, the present invention may also be applied to another embodiment in which the entire amplifier is caused to operate intermittently by a control signal transmitted thereto from outside. In this case, it is preferable not to cause the amplifier to intermittently operate while the alarm signal ALM is active low. This is because even though the first detection circuit 21, second detection circuit 22, first and second amplifiers 31 and 32 do not have to operate while the alarm signal ALM is active low, such intermittent operation may cause actually unnecessary current consumption.

According to the present invention, it is possible to provide an amplifier which amplifies an input signal, capable of operating with low current consumption while keeping sufficient sensitivity.

While the presently preferred embodiment of the present invention has been shown and described, it is to be understood that this disclosure is for the purpose of illustration and that various changes and modifications may be made without departing from the scope of the invention as set forth in the appended claims.

**Claims**

1. An amplifier (1, 10) which amplifies an input signal, comprising:

   a detection circuit (2) which detects a signal level of the input signal and outputs an alarm signal (ALM) when the input signal is in a first signal level range (R1) ; and
   a variable gain amplifier (3) arranged to, based on a detection result of the detection circuit (2), stop an amplifying operation when the input signal (VOUT) is in the first signal level range (R1), perform the amplifying operation at a first gain (G1) when the input signal (VOUT) is in a second signal level range (R2), and perform the amplifying operation at a second gain (G2) larger than the first gain (G1) when the input signal (VOUT) is in a third signal level region (R3) defined between the first (R1) and second (R2) signal level ranges.

2. The amplifier according to claim 1, wherein the variable gain amplifier (3) controls a gain according to a bias current (IO) controlled based on the detection result of the detection circuit (2).

3. The amplifier according to claim 1 or 2, wherein the detection circuit (2) detects a signal level of an output signal (VOUT) output (OUT) from the variable gain amplifier (3).

4. The amplifier (10) according to any of claims 1 to 3, wherein
   the variable gain amplifier (3) comprises:

   a first amplifier section (31) which performs an amplifying operation in response to the input signal; and
   a second amplifier section (32) which performs an amplifying operation in response to an output signal from the first amplifier section (31) ; and

   the detection circuit (2) comprises:

   a first detection circuit (21) which detects a signal level of the input signal and commands the first amplifier (31) section to stop the amplifying operation when the input signal is in the first signal level range (R1), and then outputs the alarm signal (ALM) ; and
   a second detection circuit (22) which detects the signal level of the input signal and commands the second amplifier section (32) to perform the amplifying operation at the first gain (G1) when the input signal is in the second signal level range (R2) or perform the amplifying operation at the second gain (G2) when the sense signal is in the third signal level range (R3).

5. The amplifier according to claim 4, wherein the second amplifier section (32) stops the amplifying operation when the input signal is in the first signal level range (R1) .

6. The amplifier according to claim 4, wherein the first amplifier section (31) and/or the second amplifier section (32) control a gain according to a bias current controlled based on a detection result of the detection circuit.

7. The amplifier according to claim 4, wherein the first detection circuit (21) detects the signal level of the output signal output from the second amplifier section (32).

8. The amplifier according to claim 4, wherein the second detection circuit (22) detects the signal level of the output signal output from the first amplifier section (31).

9. A control method of an amplifier (1) which amplifies an input signal, the method comprising the steps of:

   detecting a signal level of the input signal;

outputting an alarm signal (ALM) when the input signal is in a first signal level range (R1) ;
based on a detection result in the signal level detecting step,
stopping an amplifying operation when the input signal is in a first signal level range (R1),
executing the amplifying operation at a first gain (G1) when the input signal is in a second signal level range (R2), and
executing the amplifying operation at a second gain (G2) larger than the first gain (G1) when the input signal is in a third signal level range (3) defined between the first (R1) and second (R2) signal level ranges.

# FIG. 1

EP 1 872 979 A2

# FIG. 2

# FIG. 3

GAIN
CURRENT
CONSUMPTION

1ST SIGNAL LEVEL RANGE R1    3RD SIGNAL LEVEL RANGE R3    2ND SIGNAL LEVEL RANGE R2

2ND GAIN G2

1ST GAIN G1

GAIN =0

1ST SIGNAL LEVEL V1     2ND SIGNAL LEVEL V2

INPUT LEVEL

EP 1 872 979 A2

# FIG. 4

# FIG. 5

ALM

INV31

R31
N310
N311
N312 N313
N314 N315
IN1 IN2
N318 P31
N316 N317
VB31
N319
OUT1

EP 1 872 979 A2

# FIG. 6

EP 1 872 979 A2

# FIG. 7

FIG. 8

EP 1 872 979 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8018348 A
- JP 8297062 A